# EUROPEAN PATENT APPLICATION

(11) **EP 4 607 616 A1**
(43) Date of publication of application: **27.08.2025**
(21) Application number: 25156709.5
(22) Date of filing: 07.02.2025
(51) Int. Cl.: H01M 4/505, H01M 4/525, H01M 4/36, H01M 10/0525, H01M 4/02

(54) **POSITIVE ELECTRODE ACTIVE MATERIALS, POSITIVE ELECTRODES, AND RECHARGEABLE LITHIUM BATTERIES**

(30) Priority: 23.02.2024 KR 20240026638
(71) Applicant: SAMSUNG SDI CO., LTD., Yongin-si, Gyeonggi-do 17084 (KR)
(72) Inventor: KIM, Young-Ki, 17084 Yongin-si (KR); KONG, Youngsun, 17084 Yongin-si (KR); CHOO, Sung Ho, 17084 Yongin-si (KR); KANG, Seok Mun, 17084 Yongin-si (KR); YOON, Jaesang, 17084 Yongin-si (KR); KANG, Byungwuk, 17084 Yongin-si (KR); JUN, Dowook, 17084 Yongin-si (KR); DOO, Sungwook, 17084 Yongin-si (KR); KANG, Gwiwoon, 17084 Yongin-si (KR); JEONG, Jaeyong, 17084 Yongin-si (KR); LEE, Soonrewl, 17084 Yongin-si (KR)
(74) Representative: Marks & Clerk LLP

(57) **Abstract**

A positive electrode active material, a positive electrode, and a rechargeable lithium battery including the positive electrode are disclosed. The positive electrode active material includes a first positive electrode active material including a core particle in a form of secondary particles including a layered lithium nickel-manganese-based composite oxide and provided by agglomerating a plurality of primary particles and a second positive electrode active material including a core particle including a layered lithium nickel-manganese-based composite oxide and in a form of single particles. The first positive electrode active material and the second positive electrode active material each independently further include an aluminium coating layer on the surface of the core particle, and an average particle diameter (D₅₀) of the second positive electrode active material is smaller than that of the first positive electrode active material.

## Description

### BACKGROUND

### 1. Field

One or more embodiments of the present disclosure relate to a positive electrode active material, a positive electrode, and a rechargeable lithium battery.

### 2. Description of the Related Art

A portable information device, such as a cell phone, a laptop, a smart phone, and/or the like, and/or an electric vehicle uses a rechargeable lithium battery having high energy density and easy portability as a driving power source. Research has been conducted on using a rechargeable lithium battery having high energy density as a driving power source and/or for energy storage in hybrid or electric vehicles.

One or more positive electrode active materials have been investigated to realize or provide rechargeable lithium batteries for applications to the uses. Among them, lithium nickel-based oxide, lithium nickel manganese cobalt composite oxide, lithium nickel cobalt aluminium composite oxide, and lithium cobalt oxide are mainly or predominantly used as positive electrode active materials. While the demand for large, high-capacity, and/or high-energy-density rechargeable lithium batteries has increased, the supply of a positive electrode active material including cobalt, a rare metal, is short. For example, because cobalt is expensive and there are insufficient remaining reserves, it is desirable to develop positive electrode active materials that exclude (or do not include) cobalt or that have reduced cobalt content (e.g., amount).

### SUMMARY

One or more aspects of embodiments of the present disclosure are directed toward a positive electrode active material including a layered lithium nickel-manganese-based composite oxide, which may increase or enhance energy density, improve or enhance performance at high temperature and high voltage, and/or improve or enhance capacity (e.g., electrical capacity) characteristics, initial charge/discharge efficiency, and/or high-temperature cycle-life characteristics.

One or more aspects of embodiments of the present disclosure are directed toward a positive electrode active material that includes a first positive electrode active material including a core particle in a form of secondary particles including a layered lithium nickel-manganese-based composite oxide and formed or provided by agglomerating a plurality of primary particles, and an aluminium coating layer on the surface of the core particle, and a second positive electrode active material including a core particle including a layered lithium nickel-manganese-based composite oxide and in a form of single particles, and an aluminium coating layer on the surface of the core particle, and having an average particle diameter (D₅₀) smaller than that of the first positive electrode active material, wherein in a dQ/dV graph according to voltage, evaluated under conditions of 1C = 200 mAh/g, 0.2C, and applied current of about 0.5 mA to about 0.7 mA after formation, a ratio (H/V) of a peak intensity (H) to a voltage (V) value at a first peak is about 2.20×10² to about 3.10×10².

One or more aspects of embodiments of the present disclosure are directed toward a positive electrode that includes a positive electrode current collector and a positive electrode active material layer on the positive electrode current collector, wherein the positive electrode active material layer includes the positive electrode active material according to one or more embodiments.

One or more aspects of embodiments of the present disclosure are directed toward a rechargeable lithium battery that includes the positive electrode according to one or more embodiments, a negative electrode, and an electrolyte.

At least some of the above and other feature of the invention are set out in the claims.

The positive electrode active material according to one or more embodiments may maximize or increase capacity (e.g., electrical capacity) and/or energy density while minimizing or reducing production cost, may ensure or enhance long cycle-life, and/or may improve or enhance high-voltage and/or high-temperature characteristics. A rechargeable lithium battery using the positive electrode active material may exhibit high initial charge/discharge capacity and efficiency and may realize or provide excellent or suitable high-temperature cycle-life characteristics and/or high-temperature storage characteristics.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.
FIGS. 1 and 2 are each a schematic view illustrating a rechargeable lithium battery according to one or more embodiments.
FIGS. 3 and 4 are each schematic views illustrating a rechargeable lithium battery according to one or more embodiments.
FIG. 5 is a dQ/dV graph during formation for the half cell of Example 1.
FIG. 6 is a dQ/dV graph during standard charging and discharging after formation for the half cell of Example 1.
FIG. 7 is a dQ/dV graph during formation and standard charging and discharging for the half cell of Comparative Example 1.
FIG. 8 is a dQ/dV graph during formation and standard charging and discharging for the half cell of Comparative Example 2.

### DETAILED DESCRIPTION

Hereinafter, embodiments of the present disclosure will be described in more detail so that those of ordinary skill in the art can easily implement them. However, the subject matter of the present disclosure may be embodied in one or more suitable forms and should not be construed as being limited to the embodiments set forth herein.

The terminology used herein is used to describe particular embodiments only and is not intended to be limiting of the present disclosure. The singular expression includes the plural expression unless the context clearly dictates otherwise.

As utilized herein, the singular forms "a," "an," and "the" are intended to include the plural forms as well, unless the context clearly indicates otherwise. Further, the utilization of "may" when describing embodiments of the present disclosure refers to "one or more embodiments of the present disclosure."

In the context of the present disclosure and unless otherwise defined, the terms "use," "using," and "used" may be considered synonymous with the terms "utilize," "utilizing," and "utilized," respectively.

As utilized herein, the term "about" or similar terms are used as terms of approximation and not as terms of degree, and are intended to account for the inherent deviations in measured or calculated values that would be recognized by those of ordinary skill in the art. "About" or "approximately," as used herein, is also inclusive of the stated value and refers to within an acceptable range of deviation for the particular value as determined by one of ordinary skill in the art, considering the measurement in question and the error associated with measurement of the particular quantity (e.g., the limitations of the measurement system). For example, "about" may refer to within one or more standard deviations, or within ±30%, ±20%, ±10%, or ±5% of the stated value.

Any numerical range recited herein is intended to include all sub-ranges of substantially the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

As used herein, "combination thereof" refers to a mixture, a laminate, a composite, a copolymer, an alloy, a blend, a reaction product, and/or the like of the constituents.

Herein, it should be understood that terms, such as "comprises," "includes," or "have," are intended to designate the presence of an embodied feature, number, step, element, or a combination thereof, but it does not preclude the possibility of the presence or addition of one or more other features, numbers, steps, elements, or a combination thereof.

In the drawings, the thickness of layers, films, panels, regions, and/or the like may be exaggerated for clarity and like reference numerals designate like elements throughout the specification. It will be understood that if (e.g., when) an element, such as a layer, a film, a region, or a substrate is referred to as being "on" another element, it may be directly on the other element or intervening elements may also be present. In contrast, if (e.g., when) an element is referred to as being "directly on" another element, there are no intervening elements present.

In one or more embodiments, "layer" herein may include not only a shape formed or provided on the whole surface if (e.g., when) viewed from a plan view but also a shape formed or provided on a partial surface.

The average particle diameter may be measured by a method generally used by or generally available to those skilled in the art, for example, by a particle size analyzer and/or by a transmission electron microscope (TEM) image and/or a scanning electron microscope (SEM) image. In one or more embodiments, an average particle diameter value may be measured and obtained by using a dynamic light scattering (DLS) method, performing data analysis, counting the number of particles for each particle size range, and calculating from this information. Unless otherwise defined, the average particle diameter may refer to a diameter (D₅₀) of particles having a cumulative volume of 50 volume% in the particle size distribution. As used herein, if (e.g., when) a definition is not otherwise provided, the average particle diameter refers to a diameter (D₅₀) of particles having a cumulative volume of 50 volume% in the particle size distribution that is obtained by measuring the size (e.g., diameter or major axis length) of about 20 particles at random in a scanning electron microscope (SEM) image.

Herein, "or" is not to be construed as an exclusive meaning, for example, "A or B" is construed to include A, B, or A+B.

"Metal" is interpreted as a concept including ordinary metals, transition metals and metalloids (semi-metals).

### Positive Electrode Active Material

In one or more embodiments, a positive electrode active material includes a first positive electrode active material including a core particle in a form of secondary particles including a layered lithium nickel-manganese-based composite oxide and formed or provided by agglomerating a plurality of primary particles, and an aluminium coating layer on the surface of the core particle, and a second positive electrode active material including a core particle including a layered lithium nickel-manganese-based composite oxide and in a form of single particles, and an aluminium coating layer on the surface of the core particle, and having an average particle diameter (D₅₀) smaller than that of the first positive electrode active material.

The positive electrode active material satisfies or has, in a dQ/dV graph according to voltage, evaluated under conditions of 1 C = 200 mAh/g, 0.2 C, and applied current of about 0.5 mA to about 0.7 mA after formation, a ratio (H/V) of a peak intensity (H) to a voltage (V) value at a first peak of about 2.20×10² to about 3.10×10². These positive electrode active materials may have high energy density and capacity (e.g., electrical capacity) and may implement excellent or suitable high-voltage and high-temperature characteristics. The H/V ratio may be, for example, about 2.20×10² to about 3.00×10² or about 2.25×10² to about 2.50×10² and its unit may be mAh/gV². The formation may be the first charge and discharge process after manufacturing batteries, and the H/V may be a dQ/dV graph value at a charge and discharge cycle after the formation, which may be a dQ/dV graph value at the standard charging and discharging, for example, a value at the second charge and discharge cycle.

At the first peak of the dQ/dV graph, a voltage (V) may be within a range of about 3.60 V to about 3.85 V. For example, the first peak may be within a voltage range of about 3.60 V to about 3.85 V. In one or more embodiments, the peak intensity (H) may be a dQ/dV value of the first peak, for example, in a range of about 700 mAh/gV to about 1100 mAh/gV or about 800 mAh/gV to about 1000 mAh/gV.

The dQ/dV graph may be characterized to show or have one peak (e.g., only one peak) within a voltage range of about 3.60 V to about 3.85 V. In one or more embodiments, the dQ/dV graph according to a voltage at the formation may show or have two peaks within a voltage range of about 3.60 V to about 3.85 V. For example, the positive electrode active material according to one or more embodiments may show or have two peaks within the voltage range at the formation but one peak at the standard charging and discharging cycle after the formation.

In one or more embodiments, in the dQ/dV graph according to a voltage at the formation, if (e.g., when) a voltage of the first peak (or a first voltage value) is denoted as V¹, peak intensity thereof (or a peak intensity at the first voltage value (V¹)) is denoted as H¹, a voltage of the second peak (or a second voltage value) is denoted as V², peak intensity thereof (or a peak intensity at the second voltage value (V²)) is denoted as H², the positive electrode active material may satisfy or have V¹<V<V² and also, H¹<H<H². In one or more embodiments, the positive electrode active material may be characterized to satisfy or have (H¹/V¹)<(H/V)<(H²/V²). Herein, V is a voltage of the first peak in the dQ/dV graph at the standard charging and discharging after the formation, and H is peak intensity of the corresponding peak. A positive electrode active material including the layered lithium nickel-manganese-based composite oxide exhibiting such dQ/dV characteristics may realize or provide excellent or suitable characteristics at a high voltage and a high temperature as well as high energy density.

The positive electrode active material according to one or more embodiments includes a first positive electrode active material and a second positive electrode active material.

The average particle diameter (D₅₀) of secondary particles of the first positive electrode active material is larger than the average particle diameter (D₅₀) of single particles of the second positive electrode active material. The first positive electrode active material may be represented as large particles (e.g., relatively large particles), and the second positive electrode active material may be represented as small particles (e.g., relatively small particles). By properly or suitably mixing large particles in the form of secondary particles and small particles in the form of single particles, capacity (e.g., electrical capacity) and energy density of the lithium nickel-manganese-based positive electrode may be maximized or enhanced, and high-temperature cycle-life characteristics and high-voltage characteristics may be improved or enhanced. As used herein, if (e.g., when) a definition is not otherwise provided, the average particle diameter refers to a diameter (D₅₀) of particles having a cumulative volume of 50 volume% in the particle size distribution that is obtained by measuring the size (e.g., diameter or major axis length) of about 20 particles at random in a scanning electron microscope image for positive electrode active materials.

The average particle diameter (D₅₀) of the secondary particles of the first positive electrode active material may be, for example, about 10 µm to about 20 µm, about 10 µm to about 18 µm, or about 12 µm to about 16 µm. The average particle diameter (D₅₀) of the single particles of the second positive electrode active material may be, for example, about 1 µm to about 8 µm, about 1 µm to about 7 µm, about 1.5 µm to about 6 µm, or about 2 µm to about 5 µm. If (e.g., when) the average particle diameter of each positive electrode active material (e.g., the first positive electrode active material and the second positive electrode active material) satisfies or is within the above ranges, high energy density may be achieved, and excellent or suitable cycle-life characteristics may be achieved.

The first positive electrode active material may be included in an amount of about 60 wt% to about 95 wt%, for example, about 70 wt% to about 90 wt%, based on 100 wt% of a total amount of the first positive electrode active material and the second positive electrode active material. The second positive electrode active material may be included in an amount of about 5 wt% to about 40 wt%, for example, about 10 wt% to about 30 wt%, based on 100 wt% of a total amount of the first positive electrode active material and the second positive electrode active material. If (e.g., when) the mixing ratio of the first positive electrode active material and the second positive electrode active material satisfies or is within the above ranges, energy density may be increased or enhanced while maximizing or enhancing capacity (e.g., electrical capacity).

### Lithium Nickel-Manganese-Based Composite Oxide

The layered lithium nickel-manganese-based composite oxide of the first positive electrode active material and the layered lithium nickel-manganese-based composite oxide of the second positive electrode active material may be substantially the same or different from each other.

As the price of cobalt, a rare metal, has risen sharply, it is desirable to develop positive electrode active materials that exclude (or that do not include) cobalt or reduce its content (e.g., amount). A positive electrode active material having an olivine crystal structure, such as lithium iron phosphate (LFP), lithium manganese phosphate (LMP), lithium manganese iron phosphate (LMFP), and/or the like, or a spinel crystal structure, such as lithium manganese oxide (LMO) and/or the like, has a limitation in realizing or providing high capacity (e.g., high electrical capacity) due to limited amount of lithium within the structure. The layered lithium nickel-manganese positive electrode active material has excellent or suitable capacity (e.g., electrical capacity) and efficiency characteristics due to the high available lithium capacity in the structure, making it suitable as a material for high-capacity (e.g., high electrical capacity) batteries. However, as cobalt, which plays a key role in the layered structure, is removed, structural stability may decrease, resistance (e.g., electrical resistance) may increase, and it may become difficult to secure long cycle-life characteristics. In one or more embodiments, the layered nickel-manganese positive electrode active material, from which cobalt is excluded or removed (e.g., entirely or partially), may rather have a problem of accelerated side reaction with an electrolyte under high-voltage and high-temperature conditions, resulting in increased gas generation and deteriorated cycle-life characteristics.

Accordingly, in one or more embodiments, the ratio of nickel and manganese in the layered lithium nickel-manganese-based composite oxide may be appropriately or suitably adjusted, other elements, such as aluminium, may be introduced in addition to nickel and manganese, and/or a uniform (e.g., substantially uniform) coating layer (e.g., a uniform (e.g., substantially uniform) aluminium coating layer) may be introduced or provided by applying an appropriate or suitable coating method, thereby providing a positive electrode active material having improved or enhanced capacity (e.g., electrical capacity) and/or cycle-life characteristics at high voltage.

In the layered lithium nickel-manganese-based composite oxide, a nickel content (e.g., amount) may be greater than or equal to about 60 mol%, for example, about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol%, based on 100 mol% of a total amount of the metals excluding (or not including) lithium in the layered lithium nickel-manganese-based composite oxide. If (e.g., when) the nickel content (e.g., amount) satisfies or is within the above ranges, high capacity (e.g., high electrical capacity) may be achieved, and structural stability may be increased or enhanced even if the cobalt content (e.g., amount) is reduced.

A manganese content (e.g., amount) may be, for example, greater than or equal to about 10 mol%, or greater than or equal to about 15 mol%, for example, about 10 mol% to about 40 mol%, about 15 mol% to about 40 mol%, about 15 mol% to about 35 mol%, about 15 mol% to about 30 mol%, or about 20 mol% to about 30% based on 100 mol% of a total amount of the metals excluding (or not including) lithium in the layered lithium nickel-manganese-based composite oxide. If (e.g., when) the manganese content (e.g., amount) satisfies or is within the above ranges, the positive electrode active material may improve or enhance structural stability while realizing or providing high capacity (e.g., high electrical capacity) .

In each of the first positive electrode active material and the second positive electrode active material, the layered lithium nickel-manganese-based composite oxide may be a lithium nickel-manganese-aluminium-based composite oxide that includes aluminium in addition to nickel and manganese. If (e.g., when) the composite oxide includes aluminium, it may maintain or provide a substantially stable layered structure even if the cobalt element is excluded from (or not included in) the structure. An aluminium content (e.g., amount) in the layered lithium nickel-manganese-aluminium-based composite oxide, based on 100 mol% of a total amount of the metals excluding (or not including) lithium, may be greater than or equal to about 0.1 mol%, greater than or equal to about 0.5 mol%, or greater than or equal to about 1 mol%, for example, about 1 mol% to about 3 mol%, about 1 mol% to about 2.5 mol%, about 1 mol% to about 2 mol%, or about 1 mol% to about 1.9 mol%. If (e.g., when) the aluminium content (e.g., amount) satisfies or is within the above ranges, a substantially stable layered structure may be maintained or provided even if cobalt is excluded (or not included), the problem of structure collapse due to charging and discharging may be suppressed or reduced (or a degree or occurrence of the problem of structure collapse due to charging and discharging may be reduced), and long cycle-life characteristics of the positive electrode active material may be realized or provided.

The layered lithium nickel-manganese-based composite oxide of the first positive electrode active material and the layered lithium nickel-manganese-based composite oxide of the second positive electrode active material may each independently be represented by Chemical Formula 1.

Chemical Formula 1 Liₐ₁Niₓ₁Mn_{y1}Al_{z1}M¹_{w1}O_{2-b1}X_{b1}

In Chemical Formula 1, 0.9≤1≤1.8, 0.6≤x1≤0.8, 0.1≤y1≤0.4, 0≤z1≤0.03, 0≤w1≤0.3, 0.9≤x1+y1+z1+w1≤1.1, and 0≤b1≤0.1, M¹ may be one or more elements selected from among boron (B), barium (Ba), calcium (Ca), cerium (Ce), chromium (Cr), copper (Cu), iron (Fe), magnesium (Mg), molybdenum (Mo), niobium (Nb), silicon (Si), tin (Sn), strontium (Sr), titanium (Ti), vanadium (V), tungsten (W), yttrium (Y), zinc (Zn), and zirconium (Zr), and X may be one or more elements selected from among fluorine (F), phosphorus (P), and sulfur (S).

In Chemical Formula 1, for example, 0.9≤1≤1.5 or 0.9≤1≤1.2. In one or more embodiments, Chemical Formula 1 may include aluminium, in which case 0.6≤x1≤0.8, 0.1≤y1≤0.39, 0.01≤z1≤0.03, and 0≤w1≤0.29 may be satisfied or provided, or, for example, 0.6≤x1≤0.8, 0.1≤y1≤0.39, 0.01<z1≤0.03, and 0≤w1≤0.29 may be satisfied or provided.

In Chemical Formula 1, for example, 0.6≤x1≤0.79, 0.6≤x1≤0.78, 0.6≤x1≤0.75, 0.65≤x1≤0.8, or 0.7≤x1≤0.79, 0.1≤y1≤0.35, 0.1≤y1≤0.30, 0.1≤y1≤0.29, 0.15≤y1≤0.39, or 0.2≤y1≤0.3, 0.01≤z1≤0.025, 0.01<z1≤0.02, or 0.01<z1≤0.019, and 0≤w1≤0.28, 0≤w1≤0.27, 0≤w1≤0.26, 0≤w1≤0.25, 0≤w1≤0.24, 0≤w1≤0.23, 0≤w1≤0.22, 0≤w1≤0.21, 0≤w1≤0.2, 0≤w1≤0.15, 0≤w1≤0.1, or 0≤w1≤0.09.

The layered lithium nickel-manganese-based composite oxide may be a cobalt-free compound that does not include cobalt or includes a very small amount of cobalt. For example, the layered lithium nickel-manganese-based composite oxide of the first positive electrode active material and the layered lithium nickel-manganese-based composite oxide of the second positive electrode active material may each independently have a cobalt content (e.g., amount) of about 0 mol% to about 0.01 mol% based on 100 mol% of a total amount of the metals excluding (or not including) lithium.

### First Positive Electrode Active Material

According to one or more embodiments, a concentration of aluminium in the secondary particles of the first positive electrode active material, excluding (or not including) the aluminium coating layer, may be uniform (e.g., substantially uniform). For example, this may mean that there may be no concentration gradient of aluminium from the center to the surface within the particle, or an aluminium concentration on the outside of the particle may be neither higher nor lower than on the inside, and that the aluminium within the particle may be evenly (e.g., consistently) distributed. This structure may be obtained or provided by synthesizing a composite oxide using nickel-manganese-aluminium-based hydroxide as a precursor by using aluminium raw materials during precursor production without additional doping of aluminium during the synthesis of the positive electrode active material. For example, the aluminium content (e.g., amount) inside the primary particle may be substantially the same or similar regardless of the location of the primary particle. If (e.g., when) a primary particle is selected at a random position or location in the cross-section of a secondary particle and the aluminium content (e.g., amount) is measured inside the primary particle rather than at its interface, regardless of the position or location of the primary particle, for example, whether the primary particle is substantially close to the center of the secondary particle or substantially close to the surface, the aluminium content (e.g., amount) may be substantially the same/similar/uniform. In this structure, a substantially stable layered structure may be maintained or provided even if cobalt is absent or is present in a very small amount, and aluminium by-products or aluminium aggregates may not be generated so that the capacity (e.g., electrical capacity), efficiency and cycle-life characteristics of the positive electrode active material may be improved or enhanced at substantially the same time.

The first positive electrode active material includes an aluminium coating layer on the surface of the secondary particles. By including an aluminium-rich layer on the surface of the first positive electrode active material, side reactions (or a degree or occurrence of side reactions) with the electrolyte solution may be effectively or suitably suppressed or reduced at high voltage, thereby improving or enhancing capacity (e.g., electrical capacity) and cycle-life characteristics at high voltage. The layered lithium nickel-manganese-based composite oxide may experience or have chemical attacks from components in an electrolyte if (e.g., when) a battery is operated under high-voltage or high-temperature conditions, and thus it may have one or more side reactions with the electrolyte, resulting in increased amount of gas generation and thereby, deteriorated battery cycle-life and safety. However, these problems may be solved or reduced by introducing an aluminium coating layer according to one or more embodiments thereinto.

The aluminium coating layer may include, for example, aluminium oxide, lithium-aluminium oxide, or a combination thereof, for example, lithium aluminate (LiAlO₂).

In the first positive electrode active material, an aluminium content (e.g., amount) of the aluminium coating layer may be about 0.1 mol% to about 2 mol%, for example, about 0.2 mol% to about 1.9 mol%, about 0.3 mol% to about 1.8 mol%, about 0.5 mol% to about 1.5 mol%, or about 0.8 mol% to about 1.3 mol% based on 100 mol% of a total amount of the metals excluding (or not including) lithium. In the aluminium coating layer, the content (e.g., amount) of aluminium or other components may be measured, for example, through a scanning electron microscopy (SEM) with energy-dispersive X-ray spectroscopy (EDS) (SEM-EDS) analysis of the surface or a cross-section of the positive electrode active material. In the aluminium coating layer, if (e.g., when) the aluminium content (e.g., amount) satisfies or is within the foregoing ranges, an aluminium coating layer having a uniform (e.g., substantially uniform) thickness may be formed or provided, and the positive electrode active material may be effectively or suitably suppressed or reduced from a side reaction with an electrolyte without increasing or causing resistance (e.g., electrical resistance), thereby, improving or enhancing cycle-life characteristics of a rechargeable lithium battery at a high voltage.

Because a layered lithium nickel-manganese-based composite oxide may have significantly or substantially different residual lithium contents (e.g., amounts) on the particle surface and one or more different characteristics from oxides with a different composition, for example, lithium nickel-cobalt-manganese-based composite oxide, lithium nickel-cobalt-aluminium-based composite oxide, lithium cobalt-based oxide, and/or the like, it may not form a satisfactory or suitable coating layer in the form of a uniform (e.g., substantially uniform) film in a generally available coating method. Accordingly, one or more embodiments of the present disclosure provide a method of (i) first preparing or providing a coating solution by adding a coating raw material to an aqueous (e.g., water-soluble) solvent and completely dissolving it therein in a salt-dissolution method, (ii) adding core particles to the coating solution and mixing them to proceed with coating, and (iii) removing the solvent therefrom and then, performing drying and a heat treatment to introduce or provide a uniform (e.g., substantially uniform) coating layer (e.g., aluminium coating layer) to the first positive electrode active material and/or the second positive electrode active material. This method may be a salt-dissolution wet coating method and a pre-addition method in which the coating raw material, which is a salt, may be first completely dissolved, and then, the active material particles may be added thereto. Through such a method, a coating layer may be successfully formed or provided as a uniform (e.g., substantially uniform) and thin film on the surface of layered lithium nickel-manganese-based composite oxide.

Accordingly, according to the coating method, compared to a general dry method or a post-addition wet method, a content (e.g., amount) of a coating element on the active material surface may be much increased. For example, a coating content (e.g., amount) on the first positive electrode active material surface, which is measured through electron probe energy dispersive spectroscopy (EP-EDS) analysis, may be about 5 at% to about 35 at%, for example, about 5 at% to about 30 at%, about 5 at% to about 25 at%, or about 10 at% to about 20 at% based on 100 at% of a total amount of the metals excluding (or not including) lithium on the surface. Within these ranges, the coating layer (e.g., the aluminium coating layer) may not increase or cause resistance (e.g., electrical resistance) of the positive electrode active material but still may effectively or suitably improve or enhance high voltage characteristics.

The coating layer (e.g., the aluminium coating layer) of the first positive electrode active material may be in the form of a film that continuously (e.g., substantially continuously) surrounds (or cover) the surface of the secondary particle, and, for example, may be in the form of a shell that surrounds (or covers) the entire surface of the secondary particle. This is distinct (e.g., substantially distinct) from a structure in which only a portion of the surface of the secondary particle is partially coated. According to one or more embodiments, the coating layer (e.g., the aluminium coating layer) may be formed or provided to entirely cover the surface of the secondary particle and may be formed or provided to be very thin and uniform (e.g., substantially uniform) in thickness, and therefore the positive electrode active material may not increase or cause resistance (e.g., electrical resistance) or decrease capacity (e.g., electrical capacity), may improve or enhance structural stability, may effectively or suitably suppresses or reduce side reactions with electrolytes, may reduce an amount of gas generated under high-voltage and high-temperature conditions, and/or may achieve long cycle-life characteristics.

The coating layer (e.g., the aluminium coating layer) of the first positive electrode active material may have a thickness of about 5 nm to about 500 nm, for example, about 5 nm to about 450 nm, about 5 nm to about 400 nm, about 5 nm to about 350 nm, about 5 nm to about 300 nm, about 5 nm to about 250 nm, about 5 nm to about 200 nm, about 5 nm to about 150 nm, about 5 nm to about 100 nm, about 5 nm to 80 nm, about 10 nm to about 50 nm, about 20 nm to about 500 nm, about 30 nm to about 500 nm, or about 40 nm to about 500 nm. For example, the thickness of the coating layer (e.g., the aluminium coating layer) may be less than or equal to about 40 nm. If (e.g., when) the coating layer (e.g., the aluminium coating layer) satisfies or is within the foregoing thickness ranges, the structural stability of the positive electrode active material may be improved or enhanced without increasing or causing resistance (e.g., electrical resistance) or reducing capacity (e.g., electrical capacity) due to the coating, and the side reaction with the electrolyte (or a degree or occurrence of the side reaction with the electrolyte) may be effectively or suitably suppressed or reduced. The thickness of the coating layer (e.g., the aluminium coating layer) may be measured through, for example, scanning electron microscope (SEM), transmission electron microscopy (TEM), time-of-flight secondary ion mass spectrometry (TOF-SIMS), X-ray photoelectron spectroscopy (XPS), or energy-dispersive X-ray spectroscopy (EDS) analysis, and the thickness range of the coating layer (e.g., the aluminium coating layer) may be measured through transmission electron microscopy energy-dispersive X-ray spectroscopy (TEM-EDS) line profile.

The coating layer (e.g., the aluminium coating layer) of the first positive electrode active material may be thin and uniform (e.g., substantially uniform) in thickness, at the level of several to hundreds of nanometers (nm). For example, a deviation in coating layer (e.g., aluminium coating layer) thickness in one positive electrode active material particle may be less than or equal to about 20%, less than or equal to about 18%, or less than or equal to about 15%. In one or more embodiments, the deviation in coating layer (e.g., aluminium coating layer) thickness refers to the coating layer (e.g., aluminium coating layer) thickness within one positive electrode active material particle. For example, the deviation of the coating layer (e.g., the aluminium coating layer) thickness may be calculated by measuring the thickness of about 10 points in an electron microscope image of the cross-section of a single positive electrode active material particle to calculate an arithmetic average, and then dividing the absolute value of the difference between one data and the arithmetic mean value by the arithmetic mean value and multiplying by 100. The fact that the deviation or standard deviation of the coating layer (e.g., aluminium coating layer) thickness satisfies or is within the above ranges indicates that a coating layer (e.g., an aluminium coating layer) of uniform (e.g., substantially uniform) thickness is well formed or provided in a form of a film on the surface of the positive electrode active material particle. Accordingly, the structural stability of the positive electrode active material may be improved or enhanced, side reactions with the electrolyte (or a degree or occurrence of side reactions with the electrolyte) may be effectively or suitably suppressed or reduced, and the increase in resistance (e.g., electrical resistance) or decrease in capacity (e.g., electrical capacity) due to coating may be minimized or reduced.

The coating layer (e.g., the aluminium coating layer) of the first positive electrode active material may further include boron (B), magnesium (Mg), titanium (Ti), vanadium (V), tungsten (W), yttrium (Y), zirconium (Zr), or a combination thereof in addition to the aluminium (Al) to improve or enhance structural stability and/or enhance cycle-life characteristics.

For example, the coating layer (e.g., the aluminium coating layer) of the first positive electrode active material may further include zirconium. A zirconium content (e.g., amount) of the coating layer (e.g., the aluminium coating layer) may be about 0.05 mol% to about 1 mol%, for example, about 0.1 mol% to about 1 mol%, about 0.1 mol% to about 0.9 mol%, about 0.1 mol% to about 0.8 mol%, or about 0.1 mol% to about 0.6 mol% based on 100 mol% of a total amount of the metals excluding (or not including) lithium in the first positive electrode active material. If (e.g., when) the zirconium content (e.g., amount) satisfies or is within the foregoing ranges, because a satisfactory or suitable coating layer (e.g., aluminium coating layer) may be formed or provided to be without deteriorating or reducing capacity (e.g., electrical capacity) of the positive electrode active material and increasing or causing resistance (e.g., electrical resistance), a side reaction with an electrolyte may be successfully or suitably suppressed or reduced, additionally improving or enhancing capacity (e.g., electrical capacity) characteristics and cycle-life characteristics under high voltage driving conditions.

The coating layer (e.g., the aluminium coating layer) of the first positive electrode active material may further include yttrium, wherein an yttrium content (e.g., amount) of the first positive electrode active material may be about 0.1 mol% to about 1 mol% based on 100 mol% of a total amount of the metals excluding (or not including) lithium.

In one or more embodiments, in the process of forming or providing the coating layer (e.g., the aluminium coating layer), aluminium may be diffused into secondary particles. Accordingly, the positive electrode active material according to one or more embodiments may further include a grain boundary coating portion including aluminium on the surface of the primary particles inside the secondary particles. The inside of the secondary particles may refer to the entire inside excluding (or not including) the surface of the secondary particles or a region to about 60 length% from the surface of the secondary particles in a center direction of the secondary particles. The grain boundary coating portion may be distinguished from the coating layer (e.g., the aluminium coating layer) on the secondary particle surface and refers to a coating portion on the surface of the primary particles inside the secondary particles. The grain boundary coating portion may be confirmed through SEM-EDS analysis on the positive electrode active material cross-section. The aluminium grain boundary coating portion may further structurally stabilize the positive electrode active material and improve or enhance cycle-life characteristics.

An aluminium content (e.g., amount) in the grain boundary coating portion is not particularly limited but may be smaller than an aluminium content (e.g., amount) in the coating layer (e.g., the aluminium coating layer).

In one or more embodiments, the aluminium content (e.g., amount) of the coating layer (e.g., the aluminium coating layer) of the first positive electrode active material may be larger than an aluminium content (e.g., amount) of a coating layer (e.g., an aluminium coating layer) of the second positive electrode active material. For example, the aluminium content (e.g., amount) of the coating layer (e.g., the aluminium coating layer) of the first positive electrode active material and the aluminium content (e.g., amount) of the coating layer (e.g., the aluminium coating layer) of the second positive electrode active material may have a molar ratio of about 5:1 to about 2:1 or about 4:1 to about 2:1. In one or more embodiments, the aluminium in the coating layers (e.g., the aluminium coating layers) of the first positive electrode active material and the second positive electrode active material may not work as resistance (e.g., electrical resistance) (e.g., may not increase or cause resistance (e.g., electrical resistance) but improve or enhance each structural stability and minimize or reduce capacity (e.g., electrical capacity) at a high voltage and cycle-life characteristics.

### Second Positive Electrode Active Material

The single particles of the second positive electrode active material may exist alone without a grain boundary within the particle, may be composed of one particle, and may be a monolith structure, a one body structure, or a non-agglomerated particle, in which particles are not agglomerated with each other but exist as an independent phase in terms of morphology, and may be expressed as one body particle or single grain, for example, as a single crystal.

The second positive electrode active material includes an aluminium coating layer on the single particle surface. The second positive electrode active material may include an aluminium-rich layer on the surface and thus may effectively or suitably suppress or reduce a side reaction with an electrolyte solution (or a degree or occurrence of a side reaction with an electrolyte solution may be reduced) at a high voltage and thus improve or enhance capacity (e.g., electrical capacity) and cycle-life characteristics at a high voltage.

The aluminium content (e.g., amount) of the coating layer (e.g., the aluminium coating layer) of the second positive electrode active material may be about 0.1 mol% to about 2 mol%, for example, about 0.2 mol% to about 1.9 mol%, about 0.3 mol% to about 1.8 mol%, about 0.5 mol% to about 1.5 mol%, or about 0.8 mol% to about 1.3 mol% based on 100 mol% of a total amount of the metals excluding (or not including) lithium in the second positive electrode active material. This refers to only an aluminium content (e.g., amount) included in the coating layer (e.g., the aluminium coating layer) separately from aluminium that may be included inside the single particles. The aluminium content (e.g., amount) in the coating layer (e.g., the aluminium coating layer) may be, for example, measured through SEM-EDS analysis on the surface or a cross-section of the positive electrode active material. In the coating layer (e.g., the aluminium coating layer) , if (e.g., when) the aluminium content (e.g., amount) satisfies or is within the foregoing ranges, a uniform (e.g., substantially uniform) and thin coating layer (e.g., aluminium coating layer) may be formed or provided to suppress or reduce resistance (e.g., electrical resistance) of the positive electrode active material, effectively or suitably suppress or reduce a side reaction with an electrolyte (or a degree or occurrence of a side reaction with an electrolyte may be suitably reduced), resultantly improving or enhancing cycle-life characteristics of a rechargeable lithium battery under high voltage and high temperature conditions. For example, if (e.g., when) the aluminium content (e.g., amount) of the coating layer (e.g., the aluminium coating layer) is excessive or is higher than the ranges above, a uniform (e.g., substantially uniform) coating layer (e.g., aluminium coating layer) may not be formed or provided, or resistance (e.g., electrical resistance) may increase, deteriorating or reducing charge and discharge efficiency and cycle-life characteristics, and if (e.g., when) the aluminium content (e.g., amount) of the coating layer (e.g., the aluminium coating layer) is too small, a coating layer (e.g., an aluminium coating layer) having an appropriate or suitable thickness may not be formed or provided, deteriorating or reducing the effect of suppressing or reducing a side reaction with an electrolyte.

The coating layer (e.g., the aluminium coating layer) of the second positive electrode active material may further include B, Mg, Ti, V, W, Y, Zr, or a combination thereof in addition to the aluminium (Al), wherein structural stability may be increased or enhanced, and cycle-life characteristics may be improved or enhanced.

For example, the coating layer (e.g., the aluminium coating layer) of the second positive electrode active material may further include yttrium (Y). A yttrium content (e.g., amount) of the coating layer (e.g., the aluminium coating layer) of the second positive electrode active material may be about 0.1 mol% to about 1 mol%, for example, about 0.1 mol% to about 0.9 mol%, about 0.1 mol% to about 0.8 mol%, about 0.1 mol% to about 0.6 mol%, about 0.1 mol% to about 0.4 mol%, or about 0.1 mol% to about 0.3 mol% based on 100 mol% of a total amount of the metals excluding (or not including) lithium in the second positive electrode active material. If (e.g., when) the yttrium content (e.g., amount) satisfies or is within the foregoing ranges, a satisfactory or suitable coating layer (e.g., aluminium coating layer) may be formed or provided without deteriorating or reducing capacity (e.g., electrical capacity) of the positive electrode active material or increasing resistance (e.g., electrical resistance) to effectively or suitably suppress or reduce a side reaction with an electrolyte and effectively or suitably reduce an amount of generated gas under high voltage or high temperature conditions.

The coating layer (e.g., the aluminium coating layer) of the second positive electrode active material may be in the form of a thin film continuously (e.g., substantially continuously) surrounding (or covering) the surface of the single particles, for example, in the form of a shell entirely surrounding (or covering) the surface of the single particles. This feature or characteristic is distinguished from a structure of being coated on a portion of the surface of the particles. According to one or more embodiments, the coating layer (e.g., the aluminium coating layer) may not only be in the form of entirely surrounding (or covering) the surface of the single particles but also have a very or substantially thin and uniform (e.g., substantially uniform) thickness and accordingly, improve or enhance structural stability of the positive electrode active material without increasing or causing resistance (e.g., electrical resistance) or deteriorating or reducing capacity (e.g., electrical capacity) and effectively or suitably suppress or reduce a side reaction with an electrolyte, resultantly realizing or providing long cycle-life characteristics at a high voltage.

The coating layer (e.g., the aluminium coating layer) of the second positive electrode active material may have a thickness of about 5 nm to about 500 nm, for example, about 5 nm to about 450 nm, about 5 nm to about 400 nm, about 5 nm to about 350 nm, about 5 nm to about 300 nm, about 5 nm to about 250 nm, about 5 nm to about 200 nm, about 5 nm to about 150 nm, about 5 nm to about 100 nm, about 5 nm to 80 nm, about 10 nm to about 50 nm, about 20 nm to about 500 nm, about 30 nm to about 500 nm, or about 40 nm to about 500 nm. For example, the thickness of the coating layer (e.g., the aluminium coating layer) may be less than or equal to about 40 nm. If (e.g., when) the coating layer (e.g., the aluminium coating layer) satisfies or is within the foregoing thickness ranges, the structural stability of the positive electrode active material may be improved or enhanced without increasing or causing resistance (e.g., electrical resistance) or reducing capacity (e.g., electrical capacity) due to the coating, and the side reaction with the electrolyte may be effectively or suitably suppressed or reduced. The thickness of the coating layer (e.g., the aluminium coating layer) may be measured through, for example, SEM, TEM, TOF-SIMS, XPS, or EDS analysis, and the thickness range of the coating layer (e.g., the aluminium coating layer) may be measured through TEM-EDS line profile.

In the coating layer of the second positive electrode active material, aluminium may exist in the form of a continuous film (e.g., a substantially continuous film), and yttrium may exist in the form of an island due to characteristics of each element.

In one or more embodiments, aluminium and yttrium may be mixed in one coating layer, wherein the aluminium may exist in the form of a continuous film (e.g., a substantially continuous film), while the yttrium may exist in the form of an island but are not limited thereto.

In one or more embodiments, the aluminium and the yttrium may form or provide each separate layer. For example, the second positive electrode active material may include a first coating layer provided on the surface of the single particles and containing aluminium and a second coating layer provided on the first coating layer and containing yttrium. The first coating layer may be formed or provided as a thin film, as the aluminium may be first attached or coupled to or absorbed on the surface of the single particles surface, and the yttrium may be coated thereon to form or provide the second coating layer. In one or more embodiments, the aluminium and the yttrium may be mixed in the first coating layer and the second coating layer, but the first coating layer may be an aluminium-rich coating layer including aluminium as a primary component, and the second coating layer may be an yttrium-rich coating layer including yttrium as a primary component. In one or more embodiments, in the second coating layer, the yttrium may exist in the form of an island but is not particularly limited thereto.

The first coating layer and the second coating layer may have no particular limitation in a thickness, but the first coating layer may have a thickness of about 5 nm to about 200 nm, for example, about 5 nm to about 100 nm, about 5 nm to about 80 nm, or about 10 nm to about 50 nm. The second coating layer may have a thickness of about 5 nm to about 300 nm, for example, about 5 nm to about 200 nm, about 5 nm to about 100 nm, about 5 nm to about 80 nm, or about 10 nm to about 50 nm. If (e.g., when) each thickness satisfies or is within the foregoing ranges, the coating may neither increase or cause resistance (e.g., electrical resistance) nor reduce capacity (e.g., electrical capacity) but improve or enhance structural stability of the positive electrode active material and effectively or suitably suppress or reduce a side reaction with an electrolyte and thereby, improve or enhance cycle-life characteristics at a high voltage.

In the positive electrode active material according to one or more embodiments, a cobalt content (e.g., amount) may be less than or equal to about 0.01 mol%, less than or equal to about 0.005 mol%, less than or equal to about 0.001 mol%, for example, about 0 mol% to about 0.01 mol% based on 100 mol% of a total amount of the metals excluding (or not including) lithium. The positive electrode active material according to one or more embodiments may be, for example, a cobalt-free positive electrode active material.

In one or more embodiments, another positive electrode active material may not include sodium (Na). In one or more embodiments, sodium ions may be used in the preparing process of a positive electrode active material, but according to the preparing method further described herein, the positive electrode active material particles with a substantially stable structure and a coating layer (e.g., an aluminium coating layer) of uniform (e.g., substantially uniform) thickness may be formed or provided without using sodium ions.

The positive electrode active material according to one or more embodiments may include a sulfur (S) component on the surface, which may be due to the aluminium coating raw material.

### Positive Electrode

In one or more embodiments, a positive electrode includes a positive electrode current collector and a positive electrode active material layer on the positive electrode current collector, wherein the positive electrode active material layer includes the positive electrode active material according to one or more embodiments. The positive electrode active material layer may further include other types or kinds of positive electrode active materials in addition to the positive electrode active materials according to one or more embodiments. In one or more embodiments, the positive electrode active material layer may optionally further include a binder, a conductive (e.g., electrically conductive) material, or a combination thereof.

According to one or more embodiments, a loading level of the positive electrode active material layer may be about 10 mg/cm² to about 40 mg/cm², for example, about 10 mg/cm² to about 30 about mg/cm², or about 10 mg/cm² to about 20 mg/cm². In one or more embodiments, a density of the positive electrode active material layer in the final compressed positive electrode may be about 3.3 g/cc to about 3.7 g/cc, for example, about 3.3 g/cc to about 3.6 g/cc or about 3.4 g/cc to about 3.58 g/cc. If (e.g., when) the positive electrode active material according to one or more embodiments is applied, it may implement such a loading level and positive electrode density, and a positive electrode that satisfies or has the loading level and positive electrode density in the above ranges may be suitable to implement a high-capacity (e.g., high electrical capacity), high-energy-density rechargeable lithium battery.

### Binder

The binder may improve binding properties of positive electrode active material particles with one another and/or with a current collector. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

### Conductive Material

The conductive (e.g., electrically conductive) material may be included to provide electrode conductivity, and any suitable electrically conductive material may be used as a conductive material unless it causes a chemical change (e.g., unless it causes an undesirable chemical change to the rechargeable lithium battery). Examples of the conductive material (e.g., electrically conductive) may include a carbon-based material, such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminium, silver, and/or the like; a conductive (e.g., electrically conductive) polymer, such as a polyphenylene derivative; or a mixture thereof.

Each content (e.g., amount) of the binder and the conductive (e.g., electrically conductive) material may be about 0.5 wt% to about 5 wt% based on 100 wt% of a total amount of the positive electrode active material layer.

The positive electrode current collector may include aluminium (Al), but is not limited thereto.

### Rechargeable Lithium Battery

One or more embodiments of the present disclosure provide a rechargeable lithium battery including the positive electrode according to one or more embodiments, a negative electrode, and an electrolyte. As an example, the rechargeable lithium battery may include a positive electrode, a negative electrode, a separator between the positive electrode and the negative electrode, and an electrolyte solution.

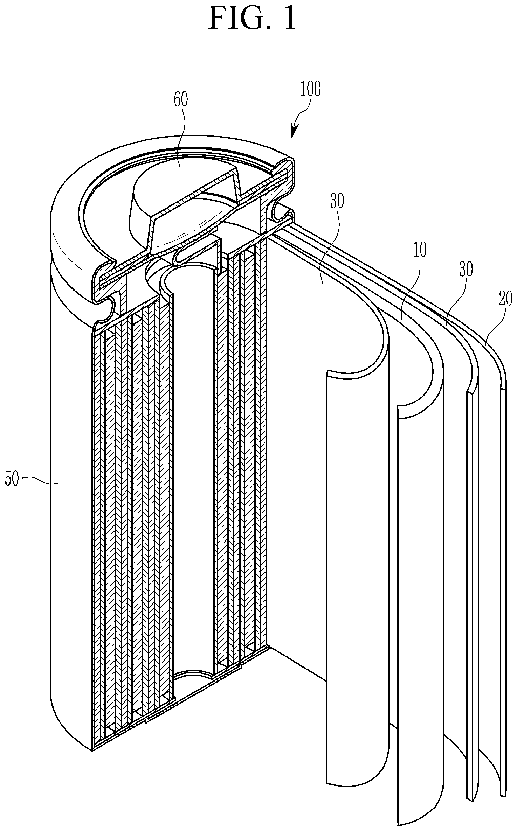

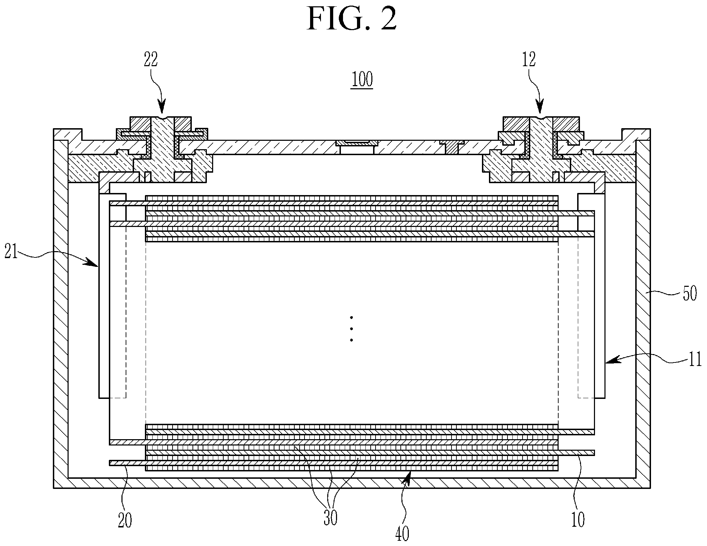

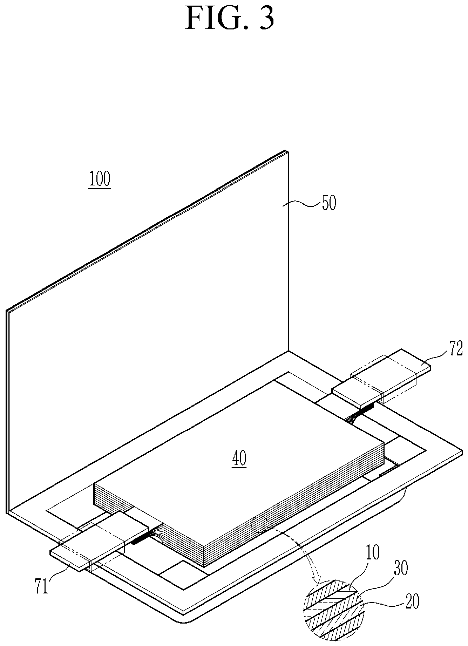

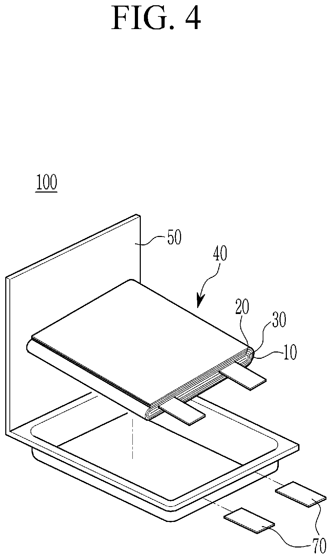

The rechargeable lithium battery may be classified into or may have cylindrical, prismatic, pouch, coin, and/or the like depending on the shape. FIGS. 1-4 are each a schematic diagram illustrating the rechargeable lithium battery according to one or more embodiments, where FIG. 1 is a cylindrical battery, FIG. 2 is a prismatic battery, and FIGS. 3 and 4 each is a pouch-shaped battery. Referring to FIGS. 1-4, the rechargeable lithium battery 100 may include an electrode assembly 40 with a separator 30 between the positive electrode 10 and the negative electrode 20, and a case 50 in which the electrode assembly 40 is housed. The positive electrode 10, the negative electrode 20, and the separator 30 may be impregnated with an electrolyte solution. The rechargeable lithium battery 100 may include a sealing member 60 that seals the case 50 as shown in FIG. 1. In one or more embodiments, in FIG. 2, the rechargeable lithium battery 100 may include a positive electrode lead tab 11, a positive electrode terminal 12, a negative lead tab 21, and a negative electrode terminal 22. As shown in FIGS. 3 and 4, the rechargeable lithium battery 100 may include an electrode tab 70, for example, a positive electrode tab 71 and a negative electrode tab 72 acting or serving as an electrical path to induce the current formed or provided in the electrode assembly 40 to the outside.

The rechargeable lithium battery according to one or more embodiments may be rechargeable at a high voltage or may be suitable to be driven at a high voltage. For example, the charging voltage of a rechargeable lithium battery may be greater than or equal to about 4.45 V, about 4.45 V to about 4.7 V, about 4.45 V to about 4.6 V, or about 4.45 V to about 4.55 V, and/or the like. By applying the positive electrode active material according to one or more embodiments, the rechargeable lithium battery may significantly or substantially reduce an amount of gas generated even when charged at high voltage and may achieve or provide high capacity (e.g., high electrical capacity) and long cycle-life characteristics.

### Negative Electrode

The negative electrode may include a current collector and a negative electrode active material layer on the current collector, and the negative electrode active material layer may further include a negative electrode active material, a binder, a conductive (e.g., electrically conductive) material, or a combination thereof.

### Negative Electrode Active Material

The negative electrode active material may include a material that reversibly intercalates/deintercalates lithium ions, a lithium metal, a lithium metal alloy, a material capable of doping/dedoping lithium, and/or transition metal oxide.

The material that reversibly intercalates/deintercalates lithium ions may include, for example, crystalline carbon, amorphous carbon, or a combination thereof as a carbon-based negative electrode active material. The crystalline carbon may be irregular (e.g., substantially irregular), and/or sheet (e.g., substantially sheet), flake (e.g., substantially flake), spherical (e.g., substantially spherical), and/or fiber (e.g., substantially fiber) shaped natural graphite and/or artificial graphite. The amorphous carbon may be a soft carbon, a hard carbon, a mesophase pitch carbonization product, calcined coke, and/or the like.

The lithium metal alloy may include an alloy of lithium and a metal selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminium (Al), and tin (Sn).

The material capable of doping/dedoping lithium may be a Si-based negative electrode active material and/or a Sn-based negative electrode active material. The Si-based negative electrode active material may include silicon, a silicon-carbon composite, SiOₓ (wherein 0 < x ≤ 2), a Si-Q alloy (wherein Q may be an element selected from among an alkali metal, an alkaline-earth metal, a Group 13 element, a Group 14 element (excluding (or not including) Si), a Group 15 element, a Group 16 element, a transition metal, a rare earth element, and a combination thereof, for example, Mg, Ca, Sr, Ba, Ra, Sc, Y, Ti, Zr, hafnium (Hf), rutherfordium (Rf), V, Nb, tantalum (Ta), dubnium (Db), Cr, Mo, W, seaborgium (Sg), technetium (Tc), rhenium (Re), bohrium (Bh), Fe, Pb, ruthenium (Ru), osmium (Os), hassium (Hs), rhodium (Rh), iridium (Ir), Pd, platinum (Pt), Cu, silver (Ag), gold (Au), Zn, cadmium (Cd), B, Al, gallium (Ga), Sn, In, Tl, Ge, P, arsenic (As), Sb, Bi, S, selenium (Se), tellurium (Te), polonium (Po), and a combination thereof), or a combination thereof. The Sn-based negative electrode active material may be Sn, SnOₖ (wherein 0<k≤2) (e.g., SnO₂), a Sn alloy, or a combination thereof.

The silicon-carbon composite may be a composite of silicon and amorphous carbon. An average particle diameter (D₅₀) of the silicon-carbon composite particles may be, for example, about 0.5 µm to about 20 µm. According to one or more embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon and/or hard carbon, a mesophase pitch carbonized product, and/or calcined coke.

If (e.g., when) the silicon-carbon composite includes silicon and amorphous carbon, a content (e.g., amount) of silicon may be about 10 wt% to about 50 wt% and a content (e.g., amount) of amorphous carbon may be about 50 wt% to about 90 wt% based on 100 wt% of a total amount of the silicon-carbon composite. In one or more embodiments, if (e.g., when) the composite includes silicon, amorphous carbon, and crystalline carbon, a content (e.g., amount) of silicon may be about 10 wt% to about 50 wt%, a content (e.g., amount) of crystalline carbon may be about 10 wt% to about 70 wt%, and a content (e.g., amount) of amorphous carbon may be about 20 wt% to about 40 wt% based on 100 wt% of a total amount of the silicon-carbon composite.

In one or more embodiments, a thickness of the amorphous carbon coating layer may be about 5 nm to about 100 nm. An average particle diameter (D₅₀) of the silicon particles (e.g., primary particles) may be about 10 nm to about 1 µm or about 10 nm to about 200 nm. The silicon particles may exist as silicon alone, in the form of a silicon alloy, or in an oxidized form. The oxidized form of silicon may be represented by SiOₓ (wherein 0 < x ≤ 2). At this time, the atomic content (e.g., amount) ratio of Si:O, which refers to a degree of oxidation, may be about 99:1 to about 33:67. As used herein, if (e.g., when) a definition is not otherwise provided, an average particle diameter (D₅₀) refers to a particle where an accumulated volume is about 50 volume% in a particle distribution.

The Si-based negative electrode active material and/or Sn-based negative electrode active material may be mixed with the carbon-based negative electrode active material. If (e.g., when) the Si-based negative electrode active material and/or Sn-based negative electrode active material and the carbon-based negative electrode active material are mixed and used, the mixing ratio may be a weight ratio of about 1:99 to about 90:10.

### Binder

The binder may act or serve to well or suitably adhere or couple the negative electrode active material particles to each other and also to adhere or couple the negative electrode active material to the current collector. The binder may be a non-aqueous (e.g., water-insoluble) binder, an aqueous (e.g., water-soluble) binder, a dry binder, or a combination thereof.

The non-aqueous (e.g., water-insoluble) binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous (e.g., water-soluble) binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

If (e.g., when) an aqueous (e.g., water-soluble) binder is used as the negative electrode binder, a cellulose-based compound capable of imparting viscosity (e.g., increasing viscosity) may be further included. As the cellulose-based compound, one or more selected from among carboxymethyl cellulose, hydroxypropyl methylcellulose (HPMC), methyl cellulose, or alkali metal salts thereof may be mixed and used. The alkali metal may be Na, K, or Li.

The dry binder may be a polymer material capable of becoming or being processed to become fiber, and may be, for example, polytetrafluoroethylene, polyvinylidene fluoride, a polyvinylidene fluoride-hexafluoropropylene copolymer, polyethylene oxide, or a combination thereof.

### Conductive (e.g., Electrically Conductive) Material

The conductive material may be included to provide electrode conductivity (e.g., electrode electrical conductivity), and any suitable electrically conductive material may be used as a conductive material unless it causes a chemical change (e.g. unless it causes an undesirable chemical change in the rechargeable lithium battery). Examples of the conductive (e.g., electrically conductive) material may include a carbon-based material, such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminium, silver, and/or the like; a conductive (e.g., electrically conductive) polymer, such as a polyphenylene derivative; or a mixture thereof.

A content (e.g., amount) of the negative electrode active material may be about 95 wt% to about 99.5 wt% based on 100 wt% of a total amount of the negative electrode active material layer, and a content (e.g., amount) of the binder may be about 0.5 wt% to about 5 wt% based on 100 wt% of a total amount of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive (e.g., electrically conductive) material.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may be in the form of a foil, sheet, or foam. A thickness of the negative electrode current collector may be, for example, about 1 µm to about 20 µm, about 5 µm to about 15 µm , or about 7 µm to about 10 µm.

### Electrolyte

For example, the electrolyte for a rechargeable lithium battery may be an electrolyte, which may include a non-aqueous (e.g., water-insoluble) organic solvent and a lithium salt.

The non-aqueous (e.g., water-insoluble) organic solvent may act or serve as a medium that transmits ions taking part in the electrochemical reaction of a battery. The non-aqueous (e.g., water-insoluble) organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In one or more embodiments, the ketone-based solvent may include cyclohexanone and/or the like. The alcohol-based solvent may include ethanol, isopropyl alcohol, and/or the like, and the aprotic solvent may include nitriles, such as R-CN (wherein R may be a C2 to C20 linear, branched, or cyclic hydrocarbon group, a double bond, an aromatic ring, or an ether group, and/or the like); amides, such as dimethylformamide and/or the like; dioxolanes, such as 1,3-dioxolane, 1,4-dioxolane, and/or the like; sulfolanes; and/or the like.

The non-aqueous (e.g., water-insoluble) organic solvent may be used alone or in a mixture of two or more types or kinds, and if (e.g., when) two or more types or kinds are used in a mixture, a mixing ratio may be appropriately or suitably adjusted according to suitable or desired battery performance, which may be generally used or generally available to those working in the field.

If (e.g., when) a carbonate-based solvent is used, a cyclic carbonate and a chain carbonate may be mixed and used, and the cyclic carbonate and the chain carbonate may be mixed in a volume ratio of about 1:1 to about 1:9.

The non-aqueous (e.g., water-insoluble) organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte may further include vinyl ethylene carbonate, vinylene carbonate, and/or an ethylene carbonate-based compound to improve or enhance battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and/or cyano ethylene carbonate.

The lithium salt dissolved in the organic solvent may supply or provide lithium ions in a battery, enable a basic operation of a rechargeable lithium battery, and improve or enhance transportation of the lithium ions between positive and negative electrodes. Examples of the lithium salt may include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y may be integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within a range of about 0.1 M to about 2.0 M. If (e.g., when) the concentration of lithium salt is within the above range, the electrolyte may have suitable or appropriate ionic conductivity and viscosity, and thus excellent or suitable performance may be achieved or provided and lithium ions may move effectively or suitably.

### Separator

Depending on the type or kinds of the rechargeable lithium battery, a separator may be between the positive electrode and the negative electrode. The separator may include polyethylene, polypropylene, polyvinylidene fluoride, or a multilayer film of two or more layers thereof, and a mixed multilayer film, such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one surface or both surfaces (e.g., two opposing surfaces) of the porous substrate.

The porous substrate may be a polymer film formed or provided of any one polymer selected from among polyolefin, such as polyethylene and polypropylene, polyester, such as polyethylene terephthalate and polybutylene terephthalate, polyacetal, polyamide, polyimide, polycarbonate, polyaryletherketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., Teflon^{™}), or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one selected from a structural unit derived from (meth)acrylic acid or (meth)acrylate, and a structural unit derived from (meth)acrylamido sulfonic acid or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and a combination thereof, but is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 µm to about 20 µm, for example, about 1 µm to about 10 µm or about 1 µm to about 5 µm.

Examples and Comparative Examples of the present disclosure are described below. However, the following examples are only examples of the present disclosure, and embodiments of the present disclosure are not limited to the following examples.

### Example 1

### 1. Preparation of Positive Electrode Active Material

### (1) Preparation of First Positive Electrode Active Material

Ni_{0.75}Mn_{0.23}Al_{0.02}(OH)₂ and LiOH were mixed so that a molar ratio of (Ni+Mn+Al):Li was 1:1.05 and then, primarily heat-treated at 845 °C under an oxygen atmosphere for 8 hours to prepare a first composite oxide in a form of secondary particles having a composition of Li_{1.05}Ni_{0.75}Mn_{0.23}Al_{0.02}O₂ and an average particle diameter (D₅₀) of about 14 µm.

A coating solution was prepared by adding aluminium sulfate with 600 g of distilled water to a 1 L reactor and then, stirring the mixture at about 350 rpm for about 5 minutes to dissolve the salts. As the salts were completely dissolved, the coating solution was checked to be colorless and transparent. Subsequently, 500 g of the first composite oxide was added to the coating solution, which was being stirred, for 1.5 minutes and then, kept being stirred for about 30 minutes to prepare a first mixed solution. Herein, an aluminium content (e.g., amount) of aluminium sulfate was designed to be 1 mol% based on 100 mol% of a total amount of the metals excluding (or not including) lithium in the final positive electrode active material. The first mixed solution was confirmed to have pH 6.6 after the stirring. Subsequently, an aspirator and a filter press were used to remove the solvent form the first mixed solution, and a coated product was obtained by vacuum drying at 190 °C.

The coated product was secondarily heat-treated at 825 °C for 8 hours under an oxygen atmosphere, preparing a first positive electrode active material.

### (2) Preparation of Second Positive Electrode Active Material

Ni_{0.75}Mn_{0.25}(OH)₂, LiOH, and Al₂O₃ were mixed so that a molar ratio of (Ni+Mn):Li:Al was 1:1.05:0.02 and then, heat-treated at 900 °C for 8 hours under an oxygen atmosphere to prepare second composite oxide having a composition of Li_{1.05}Ni_{0.75}Mn_{0.23}Al_{0.02}O₂ in the form of single particles with an average particle diameter (D₅₀) of about 3 µm.

The second composite oxide, Al₂O₃, and Y₂O₃ were dry-mixed and then, heat-treated at 825 °C for 8 hours under an oxygen atmosphere to prepare a second positive electrode active material. Herein, the mixing was performed to have 0.4 mol% of aluminium and 0.05 mol% of yttrium based on 100 wt% of a total amount of the metals excluding (or not including) lithium in the final second positive electrode active material.

### (3) Preparation of Final Positive Electrode Active Material

The first positive electrode active material and the second positive electrode active material were mixed in a weight ratio of 7:3 to prepare a final positive electrode active material. The final positive electrode active material had pellet density of 3.56 g/cc.

### 2. Manufacturing of Half-cell

98.5 wt% of the positive electrode active material, 1.0 wt% of a polyvinylidene fluoride binder, and 0.5 wt% of a carbon nanotube conductive material were mixed to prepare positive electrode active material layer slurry, and the slurry was coated on an aluminium foil current collector and then, dried and compressed to manufacture a positive electrode. Herein, a positive electrode active material layer formed above had a loading level of 10 mg/cm².

The positive electrode, a lithium metal counter electrode, and a polytetrafluoroethylene separator therebetween were inserted into a case, and an electrolyte solution prepared by dissolving 1M LiPF₆ in a mixed solvent of ethylene carbonate and dimethyl carbonate in a volume ratio of 3:7 was injected thereinto to manufacture a half-cell in a common method.

### Comparative Example 1

A half-cell was manufactured substantially in the same manner as in Example 1 except that the positive electrode was manufactured by using the first positive electrode active material alone.

### Comparative Example 2

A half-cell was manufactured substantially in the same manner as in Example 1 except that the positive electrode was manufactured by using the second positive electrode active material alone.

### Comparative Example 3

A positive electrode active material and a half-cell were manufactured substantially in the same manner as in Example 1 except that the first positive electrode active material was prepared by dry-mixing first composite oxide and aluminium oxide powder and secondarily heat-treating the mixture at 825 °C for 8 hours to proceed with Al coating in a dry manner.

### Evaluation Example 1: Evaluation of dQ/dV

The half-cells according to Example 1 and Comparative Examples 1 to 3 were charged to an upper limit voltage of 4.45 V at a constant current of 0.2 C and to 0.05 C at the constant voltage and then, discharged to a cut-off voltage of 3.0 V at 0.2 C at 25 °C to proceed with a formation process (e.g., first charge and discharge). Subsequently, standard charging and discharging (e.g., second charge and discharge) was performed under substantially the same condition as the formation process. Herein, 1 C = 200 mAh/g, and a current applied thereto was in a range of 0.5 mA to 0.7 mA.

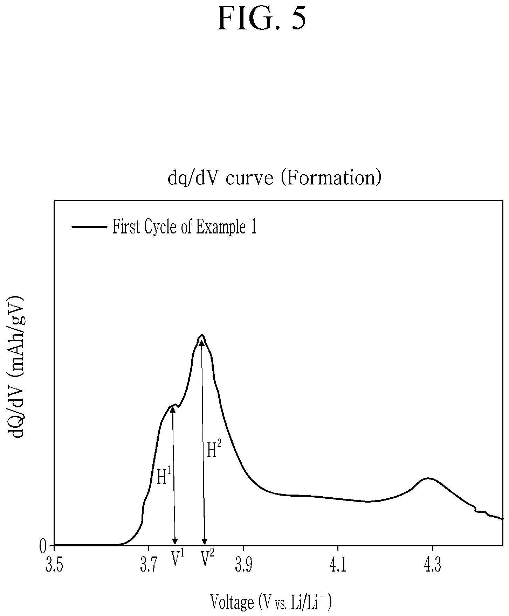

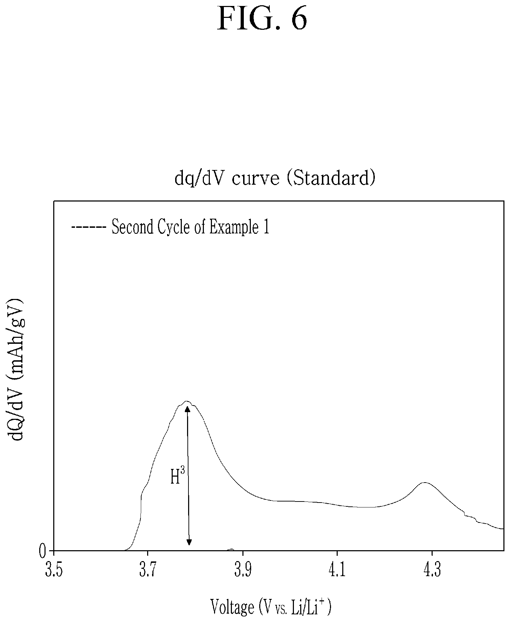

FIG. 5 is a dQ/dV graph of the battery cell of Example 1 according to charge and discharge voltages at the formation, and FIG. 6 is a dQ/dV graph of the battery cell of Example 1 according to charge and discharge voltages at the standard charging and discharging. In FIG. 5, a voltage at a first peak (or a first voltage value) is denoted as V¹, and peak intensity of dQ/dV (or a peak intensity at the first voltage value) is denoted as H¹, while a voltage at a second peak (or a second voltage value) is denoted as V², and peak intensity thereof (or a peak intensity at the second voltage value) is denoted as H². In one or more embodiments, in FIG. 6, a voltage at a first peak (or a first voltage value) is denoted as V³, and peak intensity thereof (a peak intensity at the first voltage value) is denoted as H³. Table 1 shows V¹ to V³ and H¹ to H³ values and also, H¹/V¹, H²/V², and H³/V³ calculated therefrom.

**Table 1**

| | | H¹ | H² | H³ | H/V×10² |
|---|---|---|---|---|---|
| V¹ | 3.75656 | 816 | - | - | 2.172 |
| V² | 3.81389 | - | 1223 | - | 3.207 |
| V³ | 3.78151 | - | - | 855 | 2.261 |

Referring to FIGS. 5 and 6 and Table 1, the examples exhibited a H³/V³ ratio of 2.261 ×10² at the first peak at the standard charging and discharging after the formation and also, satisfied or had V¹<V³<V², H¹<H³<H², and (H¹/V¹)<(H³/V³)< (H²/V²).

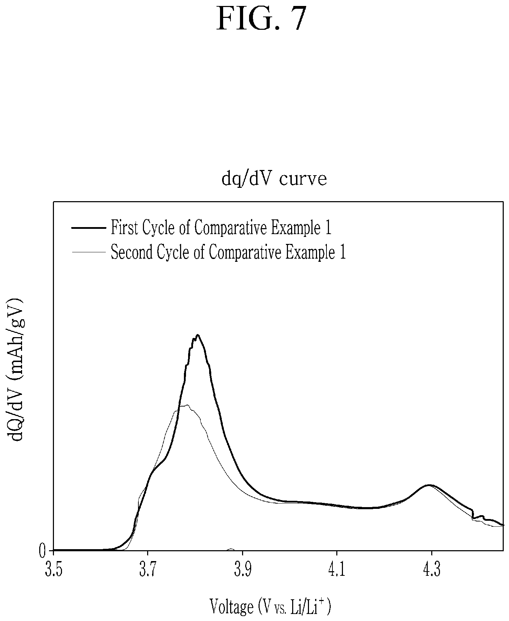

FIG. 7 is a dQ/dV graph illustrating the half-cell of Comparative Example 1, to which the first positive electrode active material alone was applied at the formation and the standard charging and discharging. Referring to FIG. 7, Comparative Example 1 exhibited two peaks in a range of 3.65 V to 3.80 V at the formation or one peak at the standard charging and discharging. In the dQ/dV graph of Comparative Example 1 at the standard charging and discharging, the first peak was analyzed to have H³/V³ of 2.18×10², which is out of the range according to one or more embodiments.

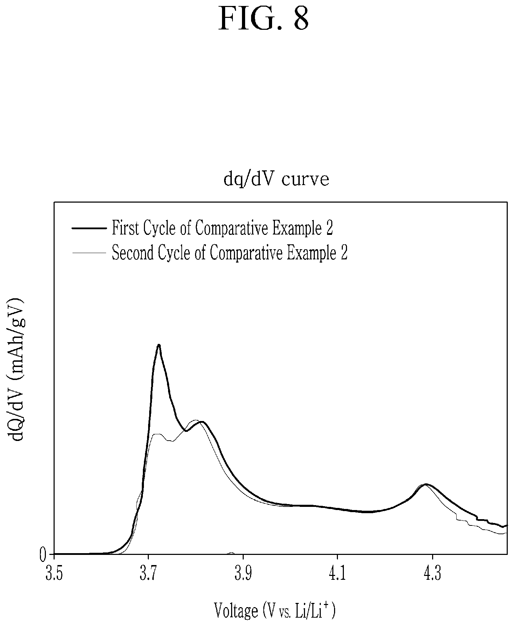

FIG. 8 is a dQ/dV graph at the formation and the standard charging and discharging of the half-cell of Comparative Example 2, to which the second positive electrode active material alone was applied. Referring to FIG. 8, there were two peaks within a range of 3.65 V to 3.80 V at the formation and also, two peaks at the standard charging and discharging, which were different from the dQ/dV graph according to one or more embodiments.

Comparative Example 3 exhibited two peaks in a range of about 3.65 V to about 3.80 V at the formation and one peak at the standard charging and discharging. However, Comparative Example 3, in the dQ/dV graph at the standard charging and discharging, exhibited that the first peak appeared at a voltage (V³) of 3.83 V and peak intensity (H³) was 1215 due to an increase in resistance (e.g., electrical resistance) of the positive electrode active material surface, and H³/V³ was analyzed therefrom to be 3.17×10², which is out of the range according to some embodiment.

### Evaluation Example 2: Evaluation of initial charge and discharge capacity and high-temperature cycle-life characteristics of battery cell

As for the half-cells according to Example 1 and Comparative Examples 1 and 2, discharge capacity at the standard charging and discharging in Evaluation Example 1 is shown as initial discharge capacity in Table 2. Following the standard charging and discharging, the cells were 50 times or more repeatedly charged and discharged at 1.0 C within a voltage range of 3.0 V to 4.45 V at 45 °C to calculate a ratio of 50^{th} cycle discharge capacity to the initial discharge capacity, which is shown as high-temperature cycle-life in Table 2.

**Table 2**

| | Initial discharge capacity (mAh/g) | High-temperature cycle-life (%, 45 °C, 50 cyc) |
|---|---|---|
| Example 1 | 195.1 | 96.8 |
| Comparative Example 1 | 195.9 | 95.7 |
| Comparative Example 2 | 196.5 | 91.9 |

Referring to Table 2, Example 1, compared to Comparative Examples 1 and 2, maintained similar initial discharge capacity and exhibited further improved high-temperature cycle-life characteristics.

While the subject matter of the present disclosure has been described in connection with what is presently considered to be practical example embodiments, it is to be understood that embodiments of the present disclosure are not limited to the disclosed embodiments. On the contrary, embodiments of the present disclosure are intended to cover one or more suitable modifications and equivalent arrangements included within the scope of the appended claims and equivalents thereof.

### Description of Symbols

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode active material, comprising:
a first positive electrode active material comprising a core particle in a form of secondary particles comprising a layered lithium nickel-manganese-based composite oxide and provided by agglomerating a plurality of primary particles, and
a second positive electrode active material comprising a core particle comprising a layered lithium nickel-manganese-based composite oxide and in a form of single particles,
wherein the first positive electrode active material and the second positive electrode active material each independently further comprise an aluminium coating layer on the surface of the core particle, and an average particle diameter (D₅₀) of the second positive electrode active material is smaller than that of the first positive electrode active material, and
wherein in a dQ/dV graph according to voltage, evaluated under conditions of 1C = 200 mAh/g, 0.2 C, and applied current of 0.5 mA to 0.7 mA after formation, a ratio (H/V) of a peak intensity (H) to a voltage (V) at a first peak is 2.20 × 10² to 3.10 × 10².

2. The positive electrode active material as claimed in claim 1, wherein:
at the first peak of the dQ/dV graph, the voltage (V) is in a range of 3.60 V to 3.85 V, and the peak intensity (H) is in a range of 800 mAh/gV to 1000 mAh/gV.

3. The positive electrode active material as claimed in claim 1 or claim 2, wherein:
the dQ/dV graph comprises only one peak in a voltage range of 3.60 V to 3.85 V.

4. The positive electrode active material as claimed in claim 3, wherein:
the dQ/dV graph according to voltage during formation comprises two peaks in the voltage range of 3.60 V to 3.85 V.

5. The positive electrode active material as claimed in claim 4, wherein:
the dQ/dV graph according to voltage during formation comprises peaks at a first voltage value (V¹) and a second voltage value (V²), which satisfies V¹<V<V².

6. The positive electrode active material as claimed in claim 5, wherein: the dQ/dV graph according to voltage during formation comprises a peak intensity at the first voltage value (V¹) (H¹) and a peak intensity at the second voltage value (V²) (H²), which satisfies H¹<H<H².

7. The positive electrode active material as claimed in claim 6, wherein:
(H¹/V¹)<(H/V)<(H²/V²) is satisfied.

8. The positive electrode active material as claimed in any one of claims 1 to 7, wherein:
the first positive electrode active material is included in an amount of 60 wt% to 95 wt%, and the second positive electrode active material is included in an amount of 5 wt% to 40 wt%, based on 100 wt% of a total amount of the first positive electrode active material and the second positive electrode active material.

9. The positive electrode active material as claimed in any one of claims 1 to 8, wherein:
an average particle diameter (D₅₀) of the secondary particles of the first positive electrode active material is 10 µm to 20 µm, and
an average particle diameter (D₅₀) of the single particles of the second positive electrode active material is 1 µm to 8 µm.

10. The positive electrode active material as claimed in any one of claims 1 to 9, wherein:
(i) the layered lithium nickel-manganese-based composite oxide of the first positive electrode active material and the layered lithium nickel-manganese-based composite oxide of the second positive electrode active material are substantially the same or different, and each independently comprise a nickel content of 60 mol% to 80 mol% and a manganese content of greater than or equal to 10 mol% based on 100 mol% of a total amount of the metals not comprising lithium; and/or
(ii) the layered lithium nickel-manganese-based composite oxide of the first positive electrode active material and the layered lithium nickel-manganese-based composite oxide of the second positive electrode active material are each independently a layered lithium nickel-manganese-aluminium-based composite oxide that comprises aluminium in addition to nickel and manganese, and
an aluminium content in the layered lithium nickel-manganese-aluminium-based composite oxide is 1 mol% to 3 mol% based on 100 mol% of a total amount of the metals not comprising lithium; and/or
(iii) the layered lithium nickel-manganese-based composite oxide of the first positive electrode active material and the layered lithium nickel-manganese-based composite oxide of the second positive electrode active material each independently have a cobalt content of 0 mol% to 0.01 mol% based on 100 mol% of a total amount of the metals not comprising lithium; and/or
(iv) the layered lithium nickel-manganese-based composite oxide of the first positive electrode active material and the layered lithium nickel-manganese-based composite oxide of the second positive electrode active material are each independently represented by Chemical Formula 1:
Chemical Formula 1 Liₐ₁Niₓ₁Mn_{y1}Al_{z1}M¹_{w1}O_{2-b1}X_{b1}
wherein in Chemical Formula 1, 0.9≤a1≤1.8, 0.6≤x1≤0.8, 0.1≤y1≤0.4, 0≤z1≤0.03, 0≤w1≤0.3, 0.9≤x1+y1+z1+w1≤1.1, and 0≤b1≤0.1, M¹ is one or more elements selected from among B, Ba, Ca, Ce, Cr, Cu, Fe, Mg, Mo, Nb, Si, Sn, Sr, Ti, V, W, Y, Zn, and Zr, and X is one or more elements selected from among F, P, and S.

11. The positive electrode active material as claimed in any one of claims 1 to 10, wherein:
(i) an aluminium content of the aluminium coating layer is 0.1 mol% to 2 mol% based on 100 mol% of a total amount of the metals not comprising lithium in the first positive electrode active material, and
an aluminium content of the aluminium coating layer is 0.1 mol% to 2 mol% based on 100 mol% of a total amount of the metals not comprising lithium in the second positive electrode active material; and/or
(ii) a molar ratio of an aluminium content of the aluminium coating layer of the first positive electrode active material to an aluminium content of the aluminium coating layer of the second positive electrode active material is 5:1 to 2:1.

12. The positive electrode active material as claimed in any one of claims 1 to 11, wherein:
(i) the aluminium coating layer of the first positive electrode active material and the aluminium coating layer of the second positive electrode active material are each in a form of a shell that continuously surrounds the surface of the core particle, and the aluminium coating layer has a thickness of 5 nm to 500 nm; and/or
(ii) the first positive electrode active material further comprises a grain boundary coating portion comprising aluminium on the surface of the plurality of primary particles inside the secondary particles.

13. The positive electrode active material as claimed in any one of claims 1 to 12, wherein:
(i) the aluminium coating layer of the first positive electrode active material or the aluminium coating layer of the second positive electrode active material comprises B, Mg, Ti, V, W, Y, Zr, or a combination thereof, optionally wherein:
the aluminium coating layer of the second positive electrode active material further comprises yttrium, and
an yttrium content in the aluminium coating layer is 0.1 mol% to 1 mol% based on 100 mol% of a total amount of the metals not comprising lithium in the second positive electrode active material.

14. A positive electrode, comprising:
a positive electrode current collector, and
a positive electrode active material layer on the positive electrode current collector,
wherein the positive electrode active material layer comprises the positive electrode active material as claimed in any one of claims 1 to 13, optionally
the positive electrode active material layer has a loading level of 10 mg/cm² to 40 mg/cm², and
the positive electrode active material layer has a density of 3.3 g/cc to 3.7 g/cc.

15. A rechargeable lithium battery, comprising:
the positive electrode as claimed in claim 14,
a negative electrode, and
an electrolyte, optionally wherein:
a charging upper limit voltage of the rechargeable lithium battery is greater than or equal to 4.45 V.
